# EUROPEAN PATENT SPECIFICATION

(11) **EP 2 451 747 B1**
(45) Date of publication and mention of the grant of the patent: **08.07.2015**
(21) Application number: 10727828.5
(22) Date of filing: 30.04.2010
(51) Int. Cl.: C02F 1/32, C02F 1/72, C02F 1/74, C02F 1/44, C02F 103/32, C02F 103/30, C02F 103/34, C02F 1/467, C02F 101/30

(54) **PURIFYING DEVICE AND METHOD FOR ELIMINATION OF XENOBIOTICS IN WATER**
REINIGUNGSVORRICHTUNG UND VERFAHREN ZUR ELIMINIERUNG VON XENOBIOTIKA IN WASSER
DISPOSITIF D'ÉPURATION ET PROCÉDÉ D'ÉLIMINATION DE SUBSTANCES XÉNOBIOTIQUES PRÉSENTES DANS L'EAU

(30) Priority: 30.04.2009 WO PCT/FR2009/050800
(43) Date of publication of application: 16.05.2012
(73) Proprietor: Derichebourg Aqua, 92390 Vileneuve la Garenne (FR)
(72) Inventor: OLIVEROS, Esther, F-31620 Cepet (FR); BRAUN, André, F-31620 Cepet (FR); MAURETTE, Marie-Thérèse, F-31400 Toulouse (FR); BENOIT-MARQUIE, Florence, F-31660 Buzet sur Tarn (FR); DEBUIRE, Jacques, F-31380 Montastruc la Conseillère (FR)
(74) Representative: Straub, Bernd
(86) International application number: PCT/IB2010/000982
(87) International publication number: WO 2010/125450

(56) References cited:
- WO-A1-98/09916
- WO-A2-2004/046038
- WO-A2-2009/151228
- CN-A- 101 423 310
- JP-A- 2000 279 952
- JP-A- 2003 190 976
- JP-A- 2003 266 090
- JP-A- 2004 057 934
- US-A1- 2007 158 276
- "ULTRAFILTRATIONM OZON UND UV FUR SAUBERES WASSER", CHEMIETECHNIK, HUTHIG, HEIDELBERG, DE, vol. 23, no. 11, 1 November 1994 (1994-11-01), page 104, XP000472914, ISSN: 0340-9961
- KLAVARIOTI M ET AL: "Removal of residual pharmaceuticals from aqueous systems by advanced oxidation processes", ENVIRONMENT INTERNATIONAL, PERGAMON PRESS, US, vol. 35, no. 2, 1 February 2009 (2009-02-01), pages 402-417, XP025882063, ISSN: 0160-4120, DOI: DOI:10.1016/J.ENVINT.2008.07.009 [retrieved on 2008-08-29]
- OPPENLANDER T ET AL: "Improved vacuum-UV (VUV)-initiated photomineralization of organic compounds in water with a xenon excimer flow-through photoreactor (Xe2<*> lamp, 172nm) containing an axially centered ceramic oxygenator", CHEMOSPHERE, PERGAMON PRESS, OXFORD, GB, vol. 60, no. 3, 1 July 2005 (2005-07-01), pages 302-309, XP027615237, ISSN: 0045-6535 [retrieved on 2005-07-01]
- OPPENLAENDER ET AL: "Novel vacuum-UV-(VUV) and UV-excimer flow-through photoreactors for waste water treatment and for wavelength-selective photochemistry", JOURNAL OF CHEMICAL SCIENCES,, vol. 107, no. 6, 1 December 1995 (1995-12-01), pages 621-636, XP009127920,

## Description

The present invention refers to the field of water treatment, especially to a device and a method for the elimination of chemically and biologically active compounds, summarized as xenobiotics.

Decontamination of water is one of the most important issues on earth. A large number of technologies has been developed in order to decompose, alter or remove chemical compounds. So, WO/1999/055622 discloses an apparatus and a method for removing strong oxidizing agents from liquids, the apparatus consisting of an irradiation unit and followed by a treatment unit that may be a softener unit, a reaction vessel with a metal redox medium or combinations thereof. In the irradiation unit, UV light in the wavelength range of 185 - 254 nm is used.

In EP 1 160 203, a method and a device for degradation of organic compounds in aqueous solution by photolysis of water with vacuum UV radiation in a range between 120 and 210 nm and by electrochemical production of dioxygen are described, the latter taking place in the irradiated part of the solution.

US 2006/0124556 A1, too, discloses an apparatus and a method for liquid purification. The apparatus comprises a plurality of filtration units, arranged in series with laser photolytic chambers producing light in the 100 to 300 nm range. Said multistep apparatus and method are designed to kill microbes and aromatic ring structures; it seems to be designed for end user applications.

Further, Sosnin et al. describe in "Application of capacitive and barrier discharge excimer lamps in photoscience", Journal of Photochem. and Photobiol. C: Photochem. Rev., 7, 2006, p. 145-163, the use of ultraviolet and vacuum ultraviolet radiation produced by excimer lamps for oxidation and mineralization of organic substrates in aqueous phase. An apparatus in bench-scale is disclosed with a flow-through photochemical reactor with water recirculating between a reservoir and the photoreactor.

JP 2003 190976 A relates to a method and an apparatus for treating wastewater provided with a means for adding an oxidating agent to wastewater and a means for dispersing the wastewater to a gas containing ozone thereby enhancing contact efficiency of wastewater and ozonated air. The oxidation treatment may comprise UV irradiation combining ozone with an oxidating agent and a metal element and UV radiation. The waste water may be filtered prior to oxidation treatment.

A device for wastewater treatment comprising ultrafiltration and catalytic oxidation requiring ozone and supported by UV-radiation is described in "Ultrafiltration Ozon und UV für sauberes Wasser", Chemietechnik, Hutug, Heidelberg, DE, vol. 23, no. 11, 1 November 1994, page 104.

JP 2004 057934 A refers to a detoxification method comprising membrane filtration of wastewater containing an organochlorine compound and performing AOP using UV to a membrane-separation concentrate. The filtrate, if water quality limitations are not met, may be supplied with hydrogen peroxide or ozone and irradiated with UV.

US 2007/158276 A1 describes a batch treatment system especially for small devices with a relatively low throughput. The described system comprises a filtration zone and an ozone infusing subsystem being in periodic fluid communication with an advanced oxidation zone which consists of a reactor and a recirculation subsystem that incorporates the use of UV and ozone.

CN 101 423 310 A refers to recycling ultra pure water comprising ultrafiltration, followed by addition of hydrogen peroxide and UV-irradiation, reverse osmosis and/or nanofiltration. /

WO 2004/046038 A2 discloses a device for decomposing pollutants in water using a high-pressure UV halogen lamp with wavelength range of 150 to 260 nm in combination with supply of oxygen and hydrogen peroxide.

JP 2003 266090 A describes the use of an excimer laser for generating ultraviolet rays for production of ozone and hydroxyl radicals from oxygen in the irradiation part following a filtration part of a water purifier.

JP 2003 266090 A refers to transferring soluble harmful pollutants contained in waste water to an adsorption material added to the waste water, separating the adsorption material from water by (micro- or ultra)filtration, backwashing of the filter, removing the separated adsorption material containing the pollutants and detoxificating by means of advanced oxidation processes as ozonization, hydrogen peroxide treatments and/or UV-treatment.

WO 2009/151228 A2 discloses a device comprising membrane filtration followed by advanced oxidation with UV-lamps under addition of ozone.

WO 98/09916 A1 refers to a water purification system for ultra pure water in relatively small amount using already purified feed water (not waste water). This water is recycled through an ultrafiltration step, an oxidizing step using exposition to UV-light and an ion exchange step.

An overview over current employed and investigated advanced oxidation processes and an optional combination with other treatment processes, varying between pre- and post-treatment, I s given in "Removal of residual pharmaceuticals from aqueous systems by advanced oxidation processes" by Klavarioti, M., et al., Environment International, Pergamon Press, US, vol. 35, no. 2, 1 Feb. 2009, pages 402-417.

EP 1 160 203 A1 refers to the electrochemical production of dioxygen in-situ in a photochemical reactor.

Oppenlander, T., et al., refers in "Improved vacuum-UV (VUV)-initiated photomineralization of organic compounds in water with a xenon excimer flow-through photoreactor (Xe3* lamp, 172 nm) containing an axially centered ceramic oxygenator", Chemosphere, vol. 60, no. 3, 1 July 2005, pages 302-309, to an apparatus with a cylindrical excimer tamp with positive coaxial radiation geometry.

An apparatus combining VUV and UV irradiation in the treatment of waste water is described by Oppenländer, T., et al., in "Novel vacuum-UV (VUV) and UV-excimer flow-through photoreactors for waste water treatment and for wavelength selective photochemistry", Journal of Chemical Sciences, vol. 107, no. 6, 1 Dec. 1995, pages 621-636.

Considering the state in the art, there is still a need for providing reliable means to purify water contaminated with xenobiotics on industrial scale.

This object is achieved with a purifying device with the features according to claim 1.

The object of reliably eliminating xenobiotics from the contaminated water is achieved by a method with the features according to claim 8.

Further embodiments of the device and the method according to this invention are disclosed in the dependent claims.

The present invention seeks to provide a device and method to eliminate xenobiotics from water, in particular from waste water and in processing of potable water. "Xenobiotics" means xenobiotic pollutants in concentrations of micro- to femtogram per liter, in particular those resulting from manufacturing and consumption of pharmaceuticals as well as those resulting from any other sources of xenobiotics production and use.

In a first embodiment of the present invention, a purifying device for photochemical elimination of xenobiotics is provided. The device can be used for up to industrial scale applications.

The purifying device comprises a photochemical reactor unit having one or more inlets for xenobiotics contaminated water and one or more outlets for purified water with a flow path for continuously flowing water being provided from the inlet to said outlet. The reactor unit is equipped with a radiation source module that produces ultraviolet radiation in the 100 to 280 nm wavelength range. Further, the purifying device comprises one or more membrane filtration units being connected upstream of said photochemical reactor unit. The membrane filtration is designed to perform ultra filtration, thereby advantageously collecting particulate matter and solvated macromolecules contained in the water stream subjected to subsequent photochemical treatment. To perform ultra filtration, the membrane filtration unit has a membrane with pore sizes in a range from 0.07 to 0.25 µm with an average pore size of 0.12 µm. Removing said particulate and macromolecular matter from the water stream leads to a higher transparency of the water and increases the efficiency of pollutant degradation.

In order to advantageously assist the process of oxidative degradation and to achieve total mineralization of the xenobiotics, the purifying device is additionally equipped with at least one device for supplying dioxygen, preferably air, into the photochemical reactor unit. Generally, the purified compressed air or dioxygen will be provided in a compressed manner. But dioxygen may also be produced *in situ* by electrolysis.

Further the radiation source module comprises a mercury low pressure lamp emitting ultraviolet radiation predominantly at wavelengths of 185 nm and 254 nm as radiation source emitting light with wavelengths in the range from 100 to 280 nm. The radiation source is surrounded by at least one enveloping tube which is at least partially transparent for the emitted ultraviolet radiation. Therefore, the material of the enveloping tube is synthetic quartz that is robust, thermally resistant, chemically inert and transparent also in the wavelength range below 200 nm.

Further, the purifying device comprises at least one device for feeding hydrogen peroxide into the photochemical reactor unit to improve the degradation of xenobiotics: Adding hydrogen peroxide during the irradiation stage leads to enhanced generating of hydroxyl radicals in particular at wavelengths above 190 nm, whereas in the wavelength range from 100 to 190 nm, hydroxyl radicals are generated by photolysis and/or homolysis of water molecules. The hydroxyl radicals initiate different radical reactions with the xenobiotics, which, in combination with said provided dioxygen (in air or pure) lead to the oxidative degradation and eventual mineralization of the xenobiotics.

The purifying device further comprise a water level regulating system or a water flow-through regulating system, said system preferably being combined with an intermediate reservoir balancing differing flow-through rates of water being treated between the photochemical reactor and the membrane filtration units.

The radiation source module is connected to an electrical power supply that may also be used for operating and controlling the electrical input and the radiation output of the module.

The membrane filtration unit is installed to perform either cross-flow filtration or dead-end filtration - both well known to the person skilled in the art - the permeate passing the filter being led into the photochemical reactor unit. Preferably the membrane of the purifying device is a hydrophilic membrane corresponding to the chemical characteristics of the medium to be filtered.

Other embodiments of the present invention refer to the radiation source module used within the photochemical reactor and arranged in a parallel or in a transverse direction in relation to the water flow path, or the water flow, respectively, provided between the inlet and outlet.

Further, the purifying device according to an embodiment of the present invention may comprise cleaning means to perform mechanical and/or chemical cleaning of the radiation source module, in particular of the enveloping tube in order to prevent loss of radiation efficiency. The cleaning method can be conducted manually or it can be triggered automatically, following a preset timing or a signal originating from transparency measurements.

Depending on a volume flow of the waste water and depending on the photochemical reactor unit design, a plurality of radiation source modules may be operated in series and/or in parallel within said photochemical reactor unit.

In order to treat a large quantity of contaminated water, the purifying device may comprise a plurality of photochemical reactor units and, respectively, a suitable number of membrane filtration units which can be arranged in series or in parallel or both, depending on the characteristics of the water to be treated and/or on the flow conditions. Generally, a membrane filtration unit is installed upstream of each photochemical reactor unit.

The xenobiotics that are treated and eliminated with the device according to an embodiment of the invention and by use of the herein described methods are exogenous molecules with relative low molecular masses; these xenobiotics may result from drug compositions, or may be comprised in water or air pollutants or food additives, phytopharmaceuticals, and other sources.

The method for eliminating xenobiotics in water according to an embodiment of the invention uses a purifying device as described above. The method is a simple procedure which generally requires performing two steps only: filtering the water and subjecting the permeate to irradiation at the desired wavelengths.

First, a continuous flow of contaminated water is fed into the membrane filtration unit to carry out said ultra filtration step with a hydrophilic membrane having pore sizes ranging from 0.07 µm to 0.25 µm with a mean pore size of 0.12 µm, thereby removing suspended and solvated macromolecular matter from the water. Then, the pre-purified water - the "permeate" - is led into the photochemical reactor unit via the at least one inlet, being subjected to ultraviolet radiation at wavelengths ranging from 100 to 280 nm, said xenobiotics being degraded due to photoinduced hydroxyl radical production. Adding hydrogen peroxide during the irradiation stage leads to enhanced generating of hydroxyl radicals in particular at wavelengths above 190 nm, whereas in the wavelength range from 100 to 190 nm, hydroxyl radicals are generated by photolysis and/or homolysis of water molecules. In the presence of air or dioxygen to be provided, the oxidative degradation may lead to the mineralization of said xenobiotics.

A continuous flow of purified water can be discharged now from the purifying device.

The method according to the invention comprising feeding contaminated water, filtering and irradiating filtered water for eliminating xenobiotics through oxidative methods and subsequently discharging the irradiated water may preferably be carried out as a continuous process. For such a purpose, several photochemical reactor units may be used in parallel or in series. Batch wise or semi-continuous processes are possible, but require that a continuous water flow is repeatedly subjected to ultraviolet radiation by recirculating it through one or several photochemical reactor unit(s).

The invention and the objects of the present invention will be better understood by reading the detailed description along with a number of examples and by reviewing the figures in which:
**Fig. 1****:** shows a schematic illustration of a photochemical reactor unit with an open channel design, and
**Fig. 2****:** shows a schematic illustration of a purifying device according to an embodiment of the invention with a cross-flow membrane filtration unit and a photochemical reactor unit.

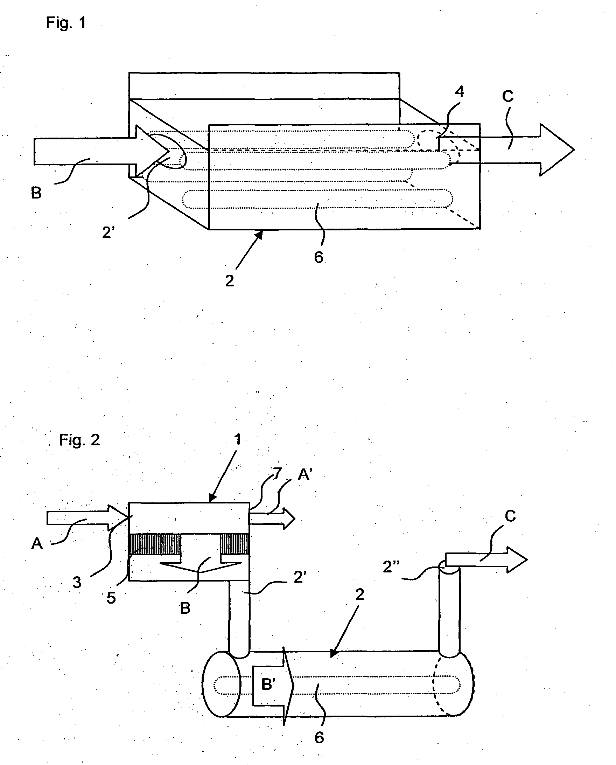

Fig. 1 and 2 show different types of the photochemical reactor unit 2 adapted to be incorporated in a purifying device of the present invention. Upstream to the photochemical reactor unit 2, the purifying device for photochemical elimination of xenobiotics in water is connected to a membrane filtration unit 1 shown in Fig. 2. The apparatus according to embodiments of the invention is suitable for large-scale waste water treatment or for processing potable water.

The membrane filtration unit shown in Fig. 2 has an inlet 3 for contaminated water inflow, indicated by arrow A. The suspended particulate or solvated macromolecular matter is concentrated or enriched in a retentate flow A' flowing along the membrane 5 of the membrane filtration unit 1 which herein is a hydrophilic membrane having a pore size in a range from 0.07 to 0.25 µm with an average pore size of 0.12 µm. Since a typical microfiltration membrane pore size range is 0.1 to 10 µm and typical pore sizes of ultra filtration membranes are below 0.1 µm, the membrane 5 used in the device of the invention shows pore sizes in between micro- and ultra filtration. Cross flow filtration as shown in Fig. 2 prevents the membrane from fouling in that no filter cake is building up.

Depending on the flow conditions, a plurality of inlets into the membrane filtration unit can be provided.

Generally, microfiltration is a filtration method for removing contaminants from a fluid passing through a microporous membrane acting as micron sized filter. Microfiltration can be carried out using pressure or not. The filter membranes are porous and allow passage of water, monovalent species, dissolved organic matter, small colloids and viruses but they retain particles, sediment, algae or large bacteria. Employing ultrafiltration in waste water treatment serves additionally to separate, and concentrate target macromolecules in continuous filtration processes. Depending on the Molecular Weight Cut Off (MWCO) of the membrane used, macromolecules may be transferred into the permeate or separated and concentrated in the retentate.

In Fig. 2, the membrane 5 is arranged in a parallel direction relative to the fluid path from the inlet 3 to the outlet 7 of the retentate A', providing cross-flow filtration. Cross-flow prevents fouling on the membrane 5. Separated suspended and solvated macromolecular matters are concentrated in the retentate A' (see the arrow), whereas the permeate, indicated by arrow B, charged with dissolved contaminants is fed via inlet 2' into the photochemical reactor unit 2.

Build-up of filter cakes on the membrane might nevertheless occur when dead-end filtration is performed and requires periodical removal resulting in a discontinuous operation of the membrane filtration unit. It may therefore be advantageous to provide at least two membrane filtration units alternately connected to a waste water inlet and to the downstream photochemical reactor unit to make sure that water flows continuously through one of the membrane filtration units while the other one is subjected to maintenance.

The photochemical reactor unit 2 of the purifying device can be equipped with one radiation source module 6 as indicated by the dashed line in Fig. 2. Alternatively, it may be equipped with more than one radiation source modules 6 as illustrated in Fig. 1, wherein four radiation source modules 6 (dashed lines) are arranged parallel to each other and aligned with the main flow path B' within the reactor, which is connected with the permeate B outlet of the membrane filtration unit 1. Each radiation source module 6 includes a radiation source which emits ultraviolet radiation in the 100 to 280 nm wavelength range.

The radiation source modules 6 within the photochemical reactor unit 2 in Figs. 1 and 2 are aligned the water flow path B'. Other photochemical reactor units may contain radiation source modules positioned vertically to the main flow path provided. In case more than one radiation source module is used within the photochemical reactor, the modules may be arranged unidirectional, in parallel or transverse, or they may be arranged forming a cross-pattern to achieve homogeneous illumination of the irradiated reactor volume.

The radiation source of a radiation source module may be surrounded by at least one enveloping tube. This enveloping tube is at least partially transparent for radiation with wavelengths needed for the photochemically induced degradation method. Therefore, the material of the enveloping tube is preferably made of quartz materials, preferably of synthetic quartz quality transparent for vacuum ultraviolet radiation below 200 nm.

In order to maintain good transmittance of the enveloping tube, means may be provided for cleaning the enveloping tube. Cleaning may be performed mechanically and/or chemically and the cleaning means may be operated manually or conveniently in an automatic manner.

The photochemical reactor unit may contain a plurality of radiation source modules which may be connected in series and/or in parallel depending on the design of the photochemical reactor unit and desirable flow conditions. Several photochemical reactor units may be connected in series and/or in parallel depending on the flux of the waste water to be treated, the nature and concentrations of the pollutants to be degraded. The radiation sources may be of different types having different emission spectra, or they can be all the same type having the same emission spectrum.

A preferred radiation source is a mercury low pressure lamp showing an emission spectrum with predominant emission lines at wavelengths of 185 nm and 254 nm. An enveloping tube of synthetic quartz allows transmission of both radiation at 185 nm and 254 nm whereas an enveloping tube of natural quartz allows only transmission of radiation at 254 nm.

Other suitable radiation sources are excimer lamps producing light of the wavelength range as claimed, particularly suitable sources are vacuum ultraviolet radiation sources, such as Xe excimer lamps with the emission maximum at 172 nm, an ArF and ArCl excimer lamp with the emission maximum at 193 nm and 175 nm, respectively. Other radiation sources capable of emitting radiation in said wavelength range comprise UV-C radiation sources, as the KrCl excimer lamp with an emission maximum at 222 nm, for example.

With regard to the broad variety of power, dimensions and geometries of radiation sources and lamps commercially available, the degradation and elimination of xenobiotics based on the irradiation technique of water with vacuum ultraviolet radiation at 185 nm, possibly in conjunction with ultraviolet-C radiation at 254 nm, may advantageously be implemented for all water treatment facility sizes.

A water level regulating system can be especially useful in a photochemical reactor unit 2 with the open channel design of Fig. 1.

The radiation source module is operated, as known by the person skilled in the art, when connected with the electrical power device comprising means for operating and controlling the radiation source or the radiation source module.

In order to assist oxidation methods and to achieve total mineralization of the xenobiotics, the purifying device is equipped with at least one device for supplying compressed air or dioxygen to the photochemical reactor unit, especially in the irradiated area surrounding the radiation source module. *In situ* production of dioxygen may be realized electrochemically using electrodes arranged in suitable manner in the irradiated area.

In order to manage large volume flows of waste water a plurality of membrane filtration units may be arranged in series and/or in parallel followed by a plurality of photochemical reactor units, whereby a main inlet for the large scale volume flow of waste water may connected with a flow splitter dividing the flow into several subflows feeding the membrane filtration units. Accordingly a permeate merging device may be designed.

Arrangement of at least one device for feeding hydrogen peroxide into the photochemical reactor unit serves for generating additional hydroxyl radicals by homolysis of hydrogen peroxide in a wavelength range above 190 nm, where photochemical homolysis of water doesn't occur. Consequently, the emitted radiation of the mercury low pressure lamp results in generating hydroxyl radicals due to homolysis of water at 185 nm and generating hydroxyl radicals by homolysis of hydrogen peroxide at 254 nm.

Hydroxyl radicals initiate different radical reactions with the xenobiotics which in combination with dioxygen lead to degradation and mineralization of the xenobiotics. Reaction pathways of those hydroxyl radical initiated reactions are known in the art.

The purifying method comprises the steps of passing a continuous flow of contaminated water through the membrane filtration unit for removing suspended and solvated macromolecular matter followed by the irradiation of the permeate (containing dissolved contaminants of relative low molecular weight) with ultraviolet radiation of the 100 to 280 nm wavelength range. Irradiation takes place in the photochemical reactor unit and produces hydroxyl radicals that initiate the elimination of xenobiotics.

The supply of compressed air or dioxygen to the photochemical step enhances degradation and mineralization of xenobiotics and therefore their elimination. After irradiation, the purified water (indicated by arrow C, see Fig. 2) can be discharged via one or more outlets 2" from the photochemical reactor unit.

The purifying device and method are adapted for removing xenobiotics and total organic carbon from any kind of contaminated water. The method may preferably be carried out continuously. It should, however, be noticed that the process may be carried out continuously or semi-continuously: For semi-continuous operation, the water is repeatedly subjected to irradiation.

The following examples illustrate the photochemical induced decomposition step of xenobiotics more clearly. The examples are given only for illustrating purposes and are not to be understood as to be limiting with respect to the scope of the present invention.

Example 1: Degradation of dichlorvos (an organophosphoric insecticide) in a purifying device with a mercury low pressure lamp as radiation source placed in a synthetic quartz tube.

Dichlorvos belongs to external insecticides which become effective for insects after contact, ingestion or inhalation, e.g.; it is used in households and agriculture. This molecule is rather stable in an aqueous environment of acid pH and its rate of hydrolysis increases with pH and temperature leading to the formation of dimethyl-phosphoric-acid and of dichloro-acetaldehyde.

Dichlorvos of an initial concentration of 10⁻³ mol/l in 350 ml of water is reduced to zero within 50 minutes, after exposition to vacuum ultraviolet radiation in combination with UV-C radiation (batch process, low pressure mercury lamp in synthetic quartz tube, 40 W).

### Example 2: Degradation of 2,4-dihydroxy-benzoic acid in a purifying device with a Xe excimer lamp as radiation source

2,4-dihydroxy-benzoic acid is a decomposition product of salicylic acid frequently found in sewage water. Its presence accounts for toxic phenomena with increasing importance as concentration in water rises. With rising concentrations, decomposition of the compound becomes more difficult.

2,4-dihydroxy-benzoic acid of an initial concentration of 400 mg/l in 350 ml of water is reduced to zero within 70 minutes, after exposition to vacuum ultraviolet radiation (batch process, Xe excimer, photon flux: Pa = (5.0 ± 0.5) 10¹⁷ photon/s). If the concentration is 10 times lower, total degradation can be achieved in less than 10 minutes.

A mercury low pressure lamp enveloped by a synthetic quartz tube could be used as well, if desired, with addition of hydrogen peroxide.

Example 3: Degradation of 2,3,4-trihydroxybenzoic acid in a purifying device with a Xe excimer lamp.

2,3,4-trihydroxybenzoic acid of an initial concentration of 400 mg/l in 350 ml of water is reduced to zero within 60 minutes, after exposition to vacuum ultraviolet radiation (batch process, Xe excimer, photon flux: Pa = (5.0 ± 0.5) 10¹⁷ photon/s). If the concentration is 10 times lower, total degradation can be achieved in less than 10 minutes.

Herein, too, a mercury low pressure lamp enveloped by a synthetic quartz tube could be used as well, if desired with addition of hydrogen peroxide.

Example 4: Degradation of glycerol trinitrate in a purifying device with a Xe excimer lamp.

Glycerol trinitrate of an initial concentration of 1.2 g/l in 350 ml of water is eliminated with a rate of 4 mg/s under conditions of permanent saturation of the solution with air and after exposition to vacuum ultraviolet radiation (Xe excimer, 120 W). After mineralization of the pollutant has been completed, no traces of nitrite have been found in the solution.

With respect to total organic carbon (TOC), the results are excellent as well: Any type of contaminated water can be treated with the method and devices as described above, leading to a total elimination of TOC in the obtained purified water.

## Claims

1. Purifying device for purifying water contaminated with xenobiotics in concentrations of micro- to femtogram per liter on industrial scale,
said purifying device comprising
- a photochemical reactor unit (2) having at least
one inlet (2') for contaminated water and one outlet (2") for purified water and providing a flow path for continuously flowing water from said inlet (2') to said outlet (2"), and being equipped with at least one radiation source module (6) providing ultraviolet radiation in a wavelength range ranging from 100 to 280 nm,
- at least one membrane filtration unit (1) comprising a hydrophilic membrane (5) having pore sizes ranging from 0.07 µm to 0.25 µm with a mean pore size of 0.12 µm and being connected upstream of said photochemical reactor unit (2) via said inlet (2') and
- at least one device for supplying air or dioxygen to the water comprised in the photochemical reactor unit (2), and
- at least one device for feeding hydrogen peroxide to the photochemical reactor unit (2), and
- one or more water flux and/or level regulating systems,
wherein
the radiation source module (6) comprises a mercury low pressure lamp emitting radiation at 185 nm and 254 nm as a radiation source emitting ultraviolet radiation in a wavelength range from 100 to 280 nm and at least one enveloping tube enveloping the radiation source,
said enveloping tube being at least partially transparent for ultraviolet radiation in the wavelength range from 100 to 280 nm, and
wherein said enveloping tube is made of synthetic quartz material.

2. Purifying device according to claim 1, **characterized in that** at least said photochemical reactor unit (2) is equipped with the water flux and/or level regulating system.

3. Purifying device according to claim 1 or 2, **characterized in that** the membrane filtration unit (1) is installed to perform cross-flow filtration or dead-end filtration, wherein a permeate passes the filter and is led into the photochemical reactor unit (2).

4. Purifying device according to at least one of claims 1 to 3,
**characterized in that**
the radiation source module/s (6) within the photochemical reactor unit (2) is/are arranged in a parallel and/or in a transverse direction in relation to the water flow path from the inlet (2') to the outlet (2").

5. Purifying device according to at least one of claims 1 to 4,
**characterized in that**
the purifying device comprises a cleaning device for mechanical and/or chemical cleaning of the radiation source module/s (6) and/or its components.

6. Purifying device according to at least one of claims 1 to 5, **characterized in that**
a plurality of photochemical reactor units (2) and a plurality of membrane filtration units (1) being arranged in series and/or in parallel with a membrane filtration unit (1) being arranged upstream each photochemical reactor unit (2).

7. Purifying device according to at least one of claims 1 to 6,
**characterized in that**
at least a water fluxes balancing reservoir is placed between the at least one membrane filtration unit (1) and the photochemical reactor unit (2).

8. Method for eliminating xenobiotics in concentrations of micro- to femtogram per liter in water on industrial scale using a purifying device according to at least one of claims 1 to 7,
comprising the steps of
- feeding a continuous flow of contaminated water into the membrane filtration unit (1)
- performing filtration with a hydrophilic membrane (5) having pore sizes ranging from 0.07 µm to 0.25 µm with a mean pore size of 0.12 µm, thereby removing suspended and solvated macromolecular matter from the water,
- conducting the permeate via the at least one inlet (2') into the photochemical reactor unit (2),
- subjecting the water flowing from said inlet (2') to said outlet (2") to ultraviolet radiation at wavelengths ranging from 100 to 280 nm and feeding hydrogen peroxide to the photochemical reactor unit (2), thereby generating hydroxyl radicals initiating degradation of said xenobiotics,
wherein adding hydrogen peroxide during the irradiation stage leads to enhanced generating of hydroxyl radicals in particular at wavelengths above 190 nm, whereas in the wavelength range from 100 to 190 nm, hydroxyl radicals are generated by photolysis and/or homolysis of water molecules,
- supplying air or dioxygen into the water, thereby enhancing the initiated oxidative degradation of said xenobiotics.

9. Method according to claim 8,
wherein
the method is a two step procedure.

10. Method according to claim 8 or 9,
comprising the step of
feeding hydrogen peroxide into the permeate upstream the inlet of or within the photochemical reactor unit (2).

11. Method according to at least one of claims 8 to 10,
wherein the method is carried out
- continuously or
- semi-continuously, with the semi-continuously performed method requiring a continuous flow of water to be repeatedly subjected to ultraviolet radiation by recirculating it through one or more photochemical reactor unit(s) (2).

## Patentansprüche

1. Aufbereitungsvorrichtung zur Aufbereitung von mit Xenobiotika kontaminiertem Wasser in Konzentrationen von Mikro- bis Femtogramm pro Liter in industriellem Maßstab,
wobei die Aufbereitungsvorrichtung aufweist:
- eine photochemische Reaktoreinheit (2), die zumindest
einen Einlass (2') für kontaminiertes Wasser und einen Auslass (2") für gereinigtes Wasser hat und einen Fließpfad für kontinuierlich fließendes Wasser von dem Einlass (2') zu dem Auslass (2") bereitstellt, und die mit zumindest einem Strahlungsquellenmodul (6) ausgestattet ist, das ultraviolette Strahlung in einem Wellenlängenbereich bereitstellt, der von 100 bis 280 nm reicht,
- zumindest eine Membranfiltrationseinheit (1), die eine hydrophile Membran (5) mit Porengrößen im Bereich von 0,07 µm bis 0,25 µm mit einer mittleren Porengröße von 0,12 µm aufweist und die stromaufwärts der photochemischen Reaktoreinheit (2) über den Einlass (2') verbunden ist, und
- zumindest eine Vorrichtung um Luft oder Sauerstoff in das Wasser einzuspeisen, das in der photochemischen Reaktorvorrichtung (2) enthalten ist, und
- zumindest eine Vorrichtung, um Wasserstoffperoxid der photochemischen Reaktoreinheit (2) zuzuführen, und
- ein oder mehrere Wasserdurchfluss- und/oder Niveauregulierungssysteme, wobei
das Strahlungsquellenmodul (6) eine Quecksilber-Niederdrucklampe, die Strahlung bei 185 nm und 254 nm emittiert, als Strahlungsquelle, die ultraviolette Strahlung in einem Wellenlängenbereich von 100 bis 280 nm emittiert, und zumindest ein Hüllrohr, das die Strahlungsquelle einhüllt, aufweist,
wobei das Hüllrohr zumindest teilweise für ultraviolette Strahlung in dem Wellenlängenbereich von 100 bis 280 nm transparent ist, und
wobei das Hüllrohr aus synthetischem Quarz hergestellt ist.

2. Aufbereitungsvorrichtung nach Anspruch 1, **dadurch gekennzeichnet, dass** zumindest die photochemische Reaktoreinheit (2) mit dem Wasserdurchfluss- und/oder Niveauregulierungssystem ausgerüstet ist.

3. Aufbereitungsvorrichtung nach Anspruch 1 oder 2, **dadurch gekennzeichnet, dass**
die Membranfiltrationseinheit (1) zur Durchführung von Cross-Flow-Filtration oder Dead-End-Filtration eingerichtet ist, wobei ein Permeat den Filter passiert und in die photochemische Reaktoreinheit (2) geleitet wird.

4. Aufbereitungsvorrichtung nach zumindest einem der Ansprüche 1 bis 3, **dadurch gekennzeichnet, dass**
das/die Strahlungsquellenmodul(e) (6) innerhalb der photochemischen Reaktoreinheit (2) in paralleler und/oder transversaler Richtung in Bezug auf den Wasserfließpfad von dem Einlass (2') zu dem Auslass (2") angeordnet ist/sind.

5. Aufbereitungsvorrichtung nach zumindest einem der Ansprüche 1 bis 4, **dadurch gekennzeichnet, dass**
die Aufbereitungsvorrichtung eine Reinigungsvorrichtung zur mechanischen und/oder chemischen Reinigung des/der Strahlungsquellenmoduls/e (6) und/oder dessen/deren Komponenten aufweist.

6. Aufbereitungsvorrichtung nach zumindest einem der Ansprüche 1 bis 5, **dadurch gekennzeichnet, dass**
eine Vielzahl photochemischer Reaktoreinheiten (2) und eine Vielzahl Membranfiltrationseinheiten (1) in Serie und/oder parallel angeordnet sind, wobei eine Membranfiltrationseinheit (1) stromaufwärts jeder photochemischen Reaktoreinheit (2) angeordnet ist.

7. Aufbereitungsvorrichtung nach zumindest einem der Ansprüche 1 bis 6, **dadurch gekennzeichnet, dass**
zumindest ein Wasserdurchfluss-Ausgleichsreservoir zwischen der zumindest einen Membranfiltrationseinheit (1) und der photochemischen Reaktoreinheit (2) angeordnet ist.

8. Verfahren zum Eliminieren von Xenobiotika in Wasser in Konzentrationen von Mikro- bis Femtogramm pro Liter in industriellem Maßstab unter Verwendung einer Aufbereitungsvorrichtung nach zumindest einem der Ansprüche 1 bis 7,
das die Schritte aufweist:
- Zuführen eines kontinuierlichen Flusses kontaminierten Wassers in die Membranfiltrationseinheit (1),
- Durchführen einer Filtration mit einer hydrophilen Membran (5), die Porengrößen im Bereich von 0,07 µm bis 0,25 µm mit einer mittleren Porengröße von 0,12 µm aufweist, dabei Entfernen suspendierter und gelöster makromolekularer Stoffe aus dem Wasser,
- Leiten des Permeats über den zumindest einen Einlass (2') in die photochemische Reaktoreinheit (2),
- Aussetzen des Wassers, das von dem Einlass (2') zu dem Auslass (2") fließt, ultravioletter Strahlung bei Wellenlängen im Bereich von 100 bis 280 nm und Zuführen von Wasserstoffperoxid zu der photochemischen Reaktoreinheit (2), dabei Erzeugen von Hydroxyl-Radikalen, die den Abbau der Xenobiotika initiieren,
wobei die Zugabe von Wasserstoffperoxid während der Bestrahlungsphase zur verstärkten Erzeugung von Hydroxyl-Radikalen insbesondere bei Wellenlängen über 190 nm führt, wohingegen in dem Wellenlängenbereich von 100 bis 190 nm Hydroxyl-Radikale durch Photolyse und/oder Homolyse von Wassermolekülen erzeugt werden,
- Einspeisen von Luft oder Sauerstoff in das Wasser, dabei Beschleunigen des initiierten oxidativen Abbaus der Xenobiotika.

9. Verfahren nach Anspruch 8,
wobei
das Verfahren ein Zweischrittverfahren ist.

10. Verfahren nach Anspruch 8 oder 9,
das den Schritt aufweist:
Zuführen von Wasserstoffperoxid in das Permeat stromaufwärts des Einlasses der oder innerhalb der photochemischen Reaktoreinheit (2).

11. Verfahren nach zumindest einem der Ansprüche 8 bis 11,
wobei das Verfahren
- kontinuierlich oder
- semi-kontinuierlich
ausgeführt wird, wobei das semi-kontinuierlich ausgeführte Verfahren einen kontinuierlichen Wasserfluss erfordert, der wiederholt ultravioletter Strahlung ausgesetzt wird, indem er durch einen oder mehrere photochemische Reaktoreinheit(en) (2) rezirkuliert wird.

## Revendications

1. Dispositif de purification pour purifier de l'eau contaminée par des agents xénobiotiques en concentrations de micro- à femtogramme par litre à l'échelle industrielle,
ledit dispositif de purification comprenant
- un module de réacteur photochimique (2) ayant au moins
une entrée (2') pour l'eau contaminée et une sortie (2") pour l'eau purifiée et fournissant un trajet d'écoulement pour de l'eau s'écoulant en continu de ladite entrée (2') à ladite sortie (2"), et étant équipé d'au moins un module de source de rayonnement (6) fournissant un rayonnement ultraviolet dans une plage de longueur d'onde allant de 100 à 280 nm,
- au moins un module de filtration à membrane () comprenant une membrane hydrophile (5) ayant des tailles de pores allant de 0,07 µm à 0,25 µm avec une taille de pores moyenne de 0,12 µm et étant connecté en amont dudit module de réacteur photochimique (2) par le biais de ladite entrée (2'), et
- au moins un dispositif pour fournir de l'air ou du dioxygène à l'eau comprise dans le module de réacteur photochimique (2), et
- au moins un dispositif pour alimenter du peroxyde d'hydrogène au module de réacteur photochimique (2), et
- un ou plusieurs systèmes de régulation de flux et/ou niveau d'eau,
dans lequel
le module de source de rayonnement (6) comprend une lampe à faible pression de mercure émettant un rayonnement à 185 nm et 254 nm comme source de rayonnement émettant un rayonnement ultraviolet dans une plage de longueur d'onde de 100 à 280 nm et au moins un tube d'enveloppement enveloppant la source de rayonnement,
ledit tube d'enveloppement étant au moins partiellement transparent pour le rayonnement ultraviolet dans la plage de longueur d'onde de 100 à 280 nm, et
dans lequel ledit tube d'enveloppement est réalisé en un matériau de quartz synthétique.

2. Dispositif de purification selon la revendication 1,
**caractérisé en ce que**
au moins ledit module de réacteur photochimique (2) est équipé du système de régulation de flux et/ou niveau d'eau.

3. Dispositif de purification selon la revendication 1 ou 2,
**caractérisé en ce que**
le module de filtration à membrane (1) est installé pour réaliser une filtration à écoulements croisés ou une filtration à cul-de-sac, dans lequel un perméat passe à travers le filtre et est conduit dans le module de réacteur photochimique (2).

4. Dispositif de purification selon au moins une des revendications 1 à 3,
**caractérisé en ce que**
le(s) module(s) de source de rayonnement (6) au sein du module de réacteur photochimique (2) est/sont agencé(s) dans une direction parallèle et/ou dans une direction transversale par rapport au trajet d'écoulement d'eau de l'entrée (2') à la sortie (2").

5. Dispositif de purification selon au moins une des revendications 1 à 4,
**caractérisé en ce que**
le dispositif de purification comprend un dispositif de nettoyage pour le nettoyage mécanique et/ou chimique du/des module(s) de source de rayonnement (6) et/ou ses composants.

6. Dispositif de purification selon au moins une des revendications 1 à 5,
**caractérisé en ce que**
une pluralité de modules de réacteur photochimique (2) et une pluralité de modules de filtration à membrane (1) sont agencés en série et/ou en parallèle avec un module de filtration à membrane (1) qui est agencé en amont de chaque module de réacteur photochimique (2).

7. Dispositif de purification selon au moins une des revendications 1 à 6,
**caractérisé en ce que**
au moins un reservoir d'équilibrage de flux d'eau est placé entre l'au moins un module de filtration à membrane (1) et le module de réacteur photochimique (2).

8. Procédé d'élimination d'agents xénobiotiques en concentrations de micro- à femtogramme par litre dans de l'eau à l'échelle industrielle utilisant un dispositif de purification selon au moins une des revendications 1 à 7,
comprenant les étapes consistant à
- alimenter un flux continu d'eau contaminée dans le module de filtration à membrane (1),
- réaliser une filtration avec une membrane hydrophile (5) ayant des tailles de pores allant de 0,07 µm à 0,25 µm avec une taille de pores moyenne de 0,12 µm, éliminant de ce fait la matière macromoléculaire en suspension et solvatée de l'eau,
- conduire le perméat par le biais de l'au moins une entrée (2') dans le module de réacteur photochimique (2),
- soumettre l'eau s'écoulant de ladite entrée (2') à ladite sortie (2") à un rayonnement ultraviolet à des longueurs d'onde allant de 100 à 280 nm et alimenter du peroxyde d'hydrogène au module de réacteur photochimique (2), générant de ce fait des radicaux hydroxyle initiant la dégradation desdits agents xénobiotiques,
dans lequel l'ajout de peroxyde d'hydrogène au cours du stade d'irradiation conduit à la génération amplifiée de radicaux hydroxyle notamment à des longueurs d'onde au-dessus de 190 nm tandis que dans la plage de longueur d'onde de 100 à 190 nm, des radicaux hydroxyle sont générés par photolyse et/ou homolyse de molécules d'eau,
- fournir de l'air ou du dioxygène dans l'eau, amplifiant de ce fait la dégradation oxydative initiée desdits agents xénobiotiques.

9. Procédé selon la revendication 8,
dans lequel
le procédé est une procédure à deux étapes.

10. Procédé selon la revendication 8 ou 9,
comprenant l'étape consistant à
alimenter du peroxyde d'hydrogène dans le perméat en amont de l'entrée du ou au sein du module de réacteur photochimique (2).

11. Procédé selon au moins une des revendications 8 à 10,
dans lequel le procédé est effectué
- en continu ou
- en semi-continu, avec le procédé réalisé de manière semi-continue nécessitant un écoulement continu d'eau devant être soumis de manière répétée à un rayonnement ultraviolet en le faisant recirculer à travers un ou plusieurs module(s) de réacteur photochimique (2).
